# EUROPÄISCHE PATENTSCHRIFT

(11) **EP 0 529 304 B1**
(45) Veröffentlichungstag und Bekanntmachung des Hinweises auf die Patenterteilung: **25.01.1995**
(21) Anmeldenummer: 92112507.6
(22) Anmeldetag: 22.07.1992
(51) Int. Cl.: B60R 21/20

(54) **Gassack-Rückhaltesystem-Baugruppe**
Airbag-restraint system-unit
Module-coussin d'air-système de retenue

(30) Priorität: 20.08.1991 DE 9110293 U
(43) Veröffentlichungstag der Anmeldung: 03.03.1993
(73) Patentinhaber: TRW REPA GMBH, 73553 Alfdorf (DE)
(72) Erfinder: Krickl, Rudi, W-7070 Schwäbisch Gmünd-Wustenried (DE); Acker, Dominique, W-7077 Alfdorf (DE); Kissendorfer, Hans, W-8870 Günzburg (DE)
(74) Vertreter: Degwert, Hartmut, Dipl.-Phys.

(56) Entgegenhaltungen:
- EP-A- 0 235 383
- DE-A- 4 026 440
- DE-A- 4 040 041

## Beschreibung

Die Erfindung betrifft eine Gassack-Rückhaltesystem-Baugruppe.

Ein Gassack-Rückhaltesystem in einem Fahrzeug enthält unter anderem einen Gassack und mindestens einen Gasgenerator, die miteinander in Verbindung stehen. Beispielsweise ist die Berandung der Einlaßöffnung des Gassacks über Schraub- oder Nietverbindungen mit einem Gehäuse verbunden, das auch den mindestens einen Gasgenerator aufnimmt. Diese Verbindungen sind sehr aufwendig herzustellen, da sie hohen mechanischen Belastungen standhalten und weitgehend gasdicht sein müssen. Wegen der Vielzahl von erforderlichen Schraub- oder Nietverbindungen stellen diese auch stets ein mögliches Fehlerpotential dar.

Ferner müssen die Bauteile eines Rückhaltesystems optimal aufeinander und auf die Verhältnisse im Fahrzeug abgestimmt sein, weshalb die gesammte Baugruppe für jeden Einsatzfall gesondert konzipiert sein muß und eine rationelle Fertigung insbesondere bei kleineren Stückzahlen bisher ausgeschlossen ist.

Der Erfindung liegt die Aufgabe zugrunde, eine hohen Ansprüchen hinsichtlich mechanischer Beanspruchbarkeit und Gasdichtheit genügende Baugruppe eines Gassack-Rückhaltesystems zu schaffen, die auch bei kleineren Stückzahlen preiswert zu fertigen und einfach zu montieren ist.

Diese Aufgabe wird bei einer Gassack-Rückhaltesystem-Baugruppe erfindungsgemäß gelöst durch vier längliche Leisten aus gleichem Profilmaterial, die entlang ihrer Länge jeweils mindestens eine erste und eine zweite Nut aufweisen, deren Querschnitt nach innen erweitert und/oder gekrümmt ist, eine viereckige, mit Öffnungen zur Aufnahme wenigstens eines Gasgenerators versehene Grundplatte, wovon drei Kanten jeweils mit Formschluß in der ersten Nut einer Leiste aufgenommen sind und eine vierte Kante an der vierten Leiste befestigt ist, eine Berandung der Einlaßöffnung des Gassacks, längs deren Umfang aufeinanderfolgend vier schlauchförmige Abschnitte zur Aufnahme in der zweiten Nut einer Leiste ausgebildet sind, und vier Stäbe, die jeweils in einem der schlauchförmigen Abschnitte zur formschlüssigen Festlegung derselben in der zweiten Nut der betreffenden Leiste eingeschoben sind. Es entfallen viele Schraub- oder Nietverbindungen, die immer auch ein gewisses Sicherheitsrisiko darstellen. Zur Montage des Gassacks müssen lediglich einige Leisten ineinander geschoben werden. Zumindest die Leisten können für zahlreiche Anwendungen standarisiert sein, was die Fertigung verbilligt.

Wenn jede Leiste eine dritte Nut aufweist und die dritten Nuten zweier einander gegenüberliegender Leisten jeweils für einen Formschluß mit einer Fahrzeugbefestigungslasche ausgebildet sind, ist die Baugruppe in einfacher Weise im Fahrzeug montierbar.

Gleichzeitig können die dritten Nuten zweier einander gegenüberliegender Leisten eine einfach montierbare Gassackabdeckung haltern, wenn jeweils eine Befestigungsleiste am Rande der Gassackabdeckung formschlüssig in sie eingreift.

Besonders einfach herzustellende und zu montierende Ausbildungen der jeweils für einen Formschluß mit einer Nut vorgesehenen Bauteile sind in den Unteransprüchen 4 bis 6 angegeben.

Ein Herausrutschen der Bauteile aus den Nuten kann durch spielfreie Passung erschwert werden beziehungsweise ist unmöglich, wenn die Leisten auf Gehrung geschnitten sind und einen geschlossenen Rahmen um die Grundplatte bilden.

Weitere Merkmale und Vorteile der Erfindung ergeben sich aus der folgenden Beschreibung einer bevorzugten Ausführungsform und aus der Zeichnung, auf die Bezug genommen wird.
- Fig. 1: zeigt in Draufsicht eine Grundplatte mit Leisten,
- Fig. 2: ist ein Schnitt längs einer Linie II-II in Fig. 1 und zeigt die Befestigung eines Gasgenerators,
- Fig. 3: ist ein Schnitt durch eine Leiste längs einer Linie III-III in Fig. 1 mit Blick von der oberen Blattkante,
und
- Fig. 4: ist eine Explosionszeichnung der Baugruppe.

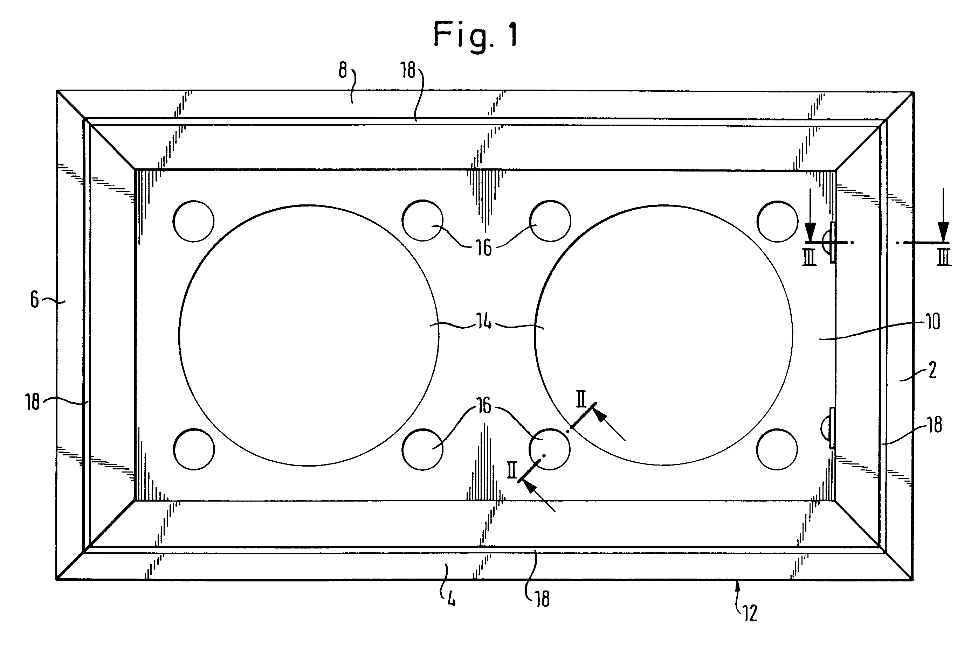

In Fig. 1 sind vier Leisten 2, 4, 6 und 8 am Umfang einer vierkantigen Grundplatte 10 befestigt. Die Leisten 2, 4, 6 und 8 sind an ihren Enden auf Gehrung geschnitten, so daß sie einen geschlossenen Rahmen 12 um die Grundplatte 10 bilden. Entlang der Leisten 2, 4, 6 und 8 und des Rahmens 12 verlaufen mehrere Nuten, von denen nur eine 18 sichtbar ist, die zur Befestigung eines nicht eingezeichneten und in der Figur oberhalb der Grundplatte anzuordnenden Gassacks dient. In der Grundplatte 10 sind zwei Einbauöffnungen 14 und acht Befestigungsbohrungen 16 für zwei Gasgeneratoren ausgespart.

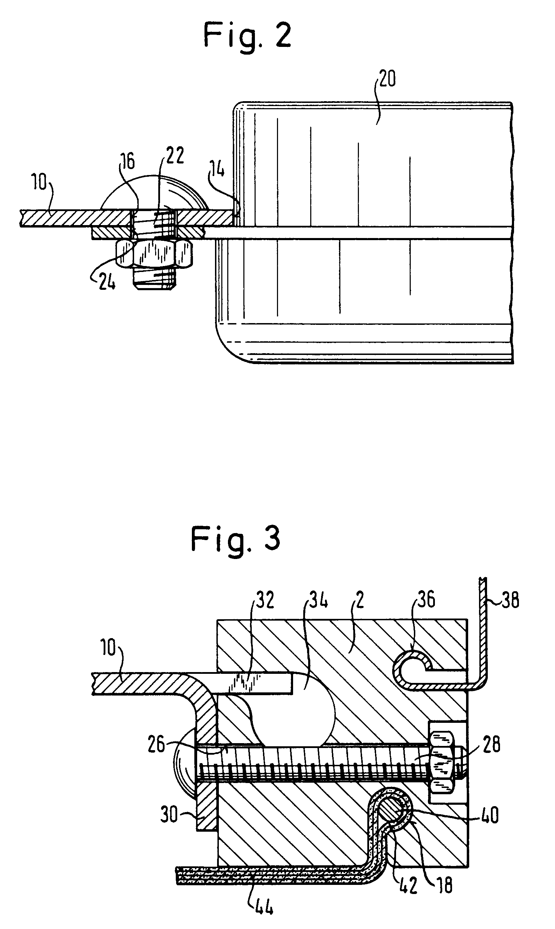

In Fig. 2 ist ein nur teilweise sichtbarer Gasgenerator 20 in einer der Einbauöffnungen 14 aufgenommen. Je ein Bolzen 22 verläuft durch eine der Befestigungsbohrungen 16 und durch eine von mehreren Bohrungen 24 in dem Gasgenerator 20.

Nach Fig. 3 ist die Leiste 2 mittels Bolzen 28, die durch Bohrungen 26 in der Leiste 2 ragen, mit einer abgewinkelten Kante 30 an einer Seite der Grundplatte 10 verschraubt. Ein vorspringender Teil 32 der Grundplatte 10 erstreckt sich in eine im Querschnitt nach innen erweiterte Nut 34 in der Leiste 2. Der vorspringende Teil 32 unterstützt die Aufnahme der großen Kräfte, die beim Zünden der Gasgeneratoren frei werden. Eine Nut 36 in der Leiste 2 ist ebenfalls im Querschnitt nach innen erweitert und nimmt ein zu einem Formschluß mit der Nut 36 umgebogenes Ende einer Fahrzeugbefestigungslasche 38 auf, deren anderes Ende in einer nicht gezeigten Weise mit einem Fahrzeugaufbau verbunden werden kann. Ferner ist die Nut 18 sichtbar, die ebenfalls im Querschnitt nach innen erweitert ist. Ein Stab 40 erstreckt sich senkrecht zur Ebene der Figur durch einen schlauchförmigen Abschnitt 42 eines nur teilweise sichtbaren Gassacks 44 und ist zusammen mit dem schlauchförmigen Abschnitt 42 formschlüssig in der Nut 18 aufgenommen.

Die anderen drei Leisten 4, 6 und 8 gleichen der Leiste 2 im Querschnitt, weisen aber keine Bohrungen 26 auf. Die Leisten 4, 6 und 8 sind an der Grundplatte 10 befestigt, indem ein dem vorspringenden Teil 32 entsprechender Teil an je einer Seite der Grundplatte 10 noch weiter vorspringt und im Inneren der Nut 34 formschlüssig mit der Nut 34 umgebogen ist, entsprechend der formschlüssigen Aufnahme des Endes der Fahrzeugbefestigungslasche 38 in der Nut 36.

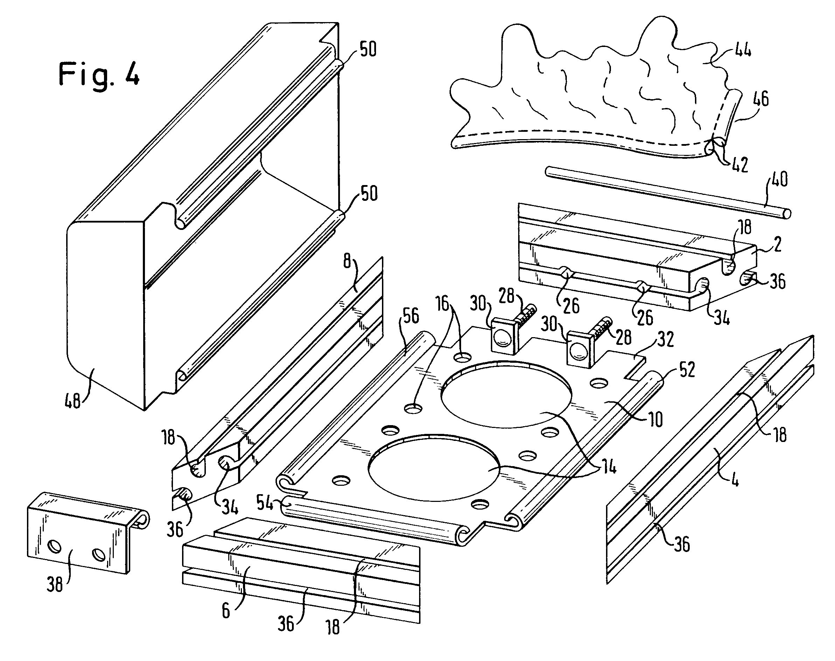

Die in Fig. 4 sichtbaren Teile sind, soweit sie schon im Zusammenhang mit den anderen Figuren erwähnt sind, mit den gleichen Bezugszahlen bezeichnet. Der Gassack 44 weist vier schlauchförmige Abschnitte 42 auf, die beispielsweise durch Umnähen des Gassackmaterials gebildet sind und eine rechteckige Einlaßöffnung 46 des Gassacks 44 abgrenzen. Ferner ist eine Gassackabdeckung 48 sichtbar, deren Rand in der im Zusammenhang mit der Fahrzeugbefestigungslasche 38 schon beschriebenen Weise zu zwei Befestigungsleisten 50 umgebogen ist, so daß die Befestigungsleisten 50 für einen Formschluß mit den Nuten 38 in den Leisten 4 und 8 ausgebildet sind. Die Grundplatte 10 weist drei jeweils für einen Formschluß mit einer der Nuten 34 umgebogene Kanten 52, 54 und 56 auf.

Die Montage der Baugruppe erfolgt beispielsweise so, daß der Gassack 44 gefaltet und in die Gassackabdeckung 48 eingelegt wird. Zwei Gasgeneratoren 22 werden in die Einbauöffnungen 14 eingeführt und durch die Befestigungsbohrungen 16 hindurch mit der Grundplatte 10 verschraubt. Die Leisten 4 und 8 werden von einer Seite her mit ihren Nuten 36 über die Befestigungsleisten 50 und mit ihren Nuten 18 über zwei schlauchförmige Abschnitte 42 des Gassacks 44 geschoben. Vor oder nach dem zuletzt beschriebenen Vorgang werden Stäbe 40 zur Herstellung des Formschlusses von einer Seite in die zu den Leisten 4 und 8 gehörenden schlauchförmigen Abschnitte 42 des Gassacks eingeschoben. Je eine Fahrzeugbefestigungslasche 38, von denen nur eine eingezeichnet ist, wird in die Nuten 36 der Leisten 2 und 6 eingeschoben. Die Leise 6 wird mit ihrer in der Figur nicht sichtbaren Nut 34 auf die Kante 54 der Grundplatte 10 geschoben und die Grundplatte 10 mit ihren Kanten 52 und 56 in die Nuten 34 der Leisten 4 und 8 eingeschoben, wobei vor der Anlage der Enden der Leisten 4 und 6 bzw. 8 und 6 aneinander noch mit einem Stab 12 Formschluß zwischen der Nut 18 der Leiste 6 und einem entsprechenden schlauchförmigen Abschnitt 42 des Gassacks 44 hergestellt wird. Die Leiste 2 wird ebenfalls durch einen Stab 12 mit dem ihr entsprechenden schlauchförmigen Abschnitt 42 des Gassacks 44 formschlüssig verbunden und mittels der Bolzen 28 mit der Kante 30 der Grundplatte 10 verschraubt. Die auf Gehrung geschnittenen Leisten 2, 4, 6 und 8 sichern die Stäbe 12, die Gassackabdeckung 48 und die Fahrzeugbefestigungslaschen 38 gegen ein Herausfallen.

Die Baugruppe bildet eine außerordentlich feste Verbindung insbesondere zwischen der Grundplatte 10 und dem Gassack 44, zwischen denen große Kräfte wirken. Gleichzeitig besteht sie aus nur wenigen Bauteilen, die zudem relativ leicht und rasch montierbar sind. Weil der Gassack 44 vor der Montage der übrigen Bauteile der Baugruppe gefaltet und in die Gassackabdeckung 48 eingelegt werden kann, besteht keine Gefahr, daß er bei der Montage beschädigt oder gequetscht wird. Aufgrund der Ausbildung der Leisten hält der Gassack 44 von sich aus einen gewissen Abstand zu den Gasgeneratoren 20 ein, so daß sich die thermische Belastung des Gassackgewebes reduziert. Ein und dasselbe Profilmaterial ist für zahlreiche Bauarten des Gassack-Rückhaltesystems verwendbar, so daß ein Baukastensystem verwirklicht ist, das die preiswerte Herstellung auch kleiner Serien ermöglicht.

## Patentansprüche

1. Gassack-Rückhaltesystem-Baugruppe, gekennzeichnet durch:
vier längliche Leisten (2, 4, 6, 8) aus gleichem Profilmaterial, die entlang ihrer Länge jeweils mindestens eine erste (34) und eine zweite (18) Nut aufweisen, deren Querschnitt nach innen erweitert und/oder gekrümmt ist,
eine viereckige, mit Öffnungen (14) zur Aufnahme wenigstens eines Gasgenerators (20) versehene Grundplatte (10), wovon drei Kanten (52, 54, 56) jeweils mit Formschluß in der ersten Nut (34) einer Leiste (4, 6, 8) aufgenommen sind und eine vierte Kante (30) an der vierten Leiste (2) befestigt ist,
eine Berandung der Einlaßöffnung (46) des Gassacks (44), längs deren Umfang aufeinanderfolgend vier schlauchförmige Abschnitte (42) zur Aufnahme in der zweiten Nut (18) einer Leiste (2, 4, 6, 8) ausgebildet sind, und
vier Stäbe (40), die jeweils in einem der schlauchförmigen Abschnitte (42) zur formschlüssigen Festlegung derselben in der zweiten Nut (18) der betreffenden Leiste (2, 4, 6, 8) eingeschoben sind.

2. Baugruppe nach Anspruch 1, dadurch gekennzeichnet, daß jede Leiste (2, 4, 6, 8) eine dritte Nut (36) aufweist und daß die dritten Nuten (36) zweier einander gegenüberliegender Leisten (2, 6; 4, 8) jeweils für einen Formschluß mit einer Fahrzeugbefestigungslasche (38) ausgebildet sind.

3. Baugruppe nach Anspruch 2, dadurch gekennzeichnet, daß in die dritten Nuten (36) zweier einander gegenüberliegender Leisten (2, 6; 4, 8) jeweils eine Befestigungsleiste (50) am Rande einer Gassackabdeckung (48) formschlüssig eingreift.

4. Baugruppe nach Anspruch 3, dadurch gekennzeichnet, daß die Befestigungsleisten (50) durch Umbiegen des Randes der Gassackabdeckung (48) gebildet sind.

5. Baugruppe nach Anspruch 2, dadurch gekennzeichnet, daß die Fahrzeugbefestigungslaschen (38) für den Formschluß mit der dritten Nut (36) einseitig umgebogen sind.

6. Baugruppe nach einem der vorstehenden Ansprüche, dadurch gekennzeichnet, daß die mit der ersten Nut (34) formschlüssigen Kanten (52, 54, 56) der Grundplatte (10) durch Umbiegen des Grundplattenmaterials gebildet sind.

7. Baugruppe nach einem der vorstehenden Ansprüche, dadurch gekennzeichnet, daß die Leisten (2, 4, 6, 8) auf Gehrung geschnitten sind und einen geschlossenen Rahmen (12) um die Grundplatte (10) bilden.

## Claims

1. Gas bag restraining system assembly, characterized by:
four elongated bars (2, 4, 6, 8) of identical profile material which each have along their length a first (34) and a second (18) groove, the cross-section of which is inwardly widened and/or curved,
a quadrangular base plate (10) which is provided with openings (14) for receiving at least one gas generator (20) and of which three edges (52, 54, 56) are each received in form-locking manner in the first groove (34) of a bar (4, 6, 8) and a fourth edge (30) is secured to the fourth bar (2),
a border of the inlet opening (46) of the gas bag (44) along the periphery of which four tubular portions (42) are consecutively formed for accommodation in the second groove (18) of a bar (2, 4, 6, 8) and
four rods (40) which are inserted into a respective one of the tubular portions (42) for form-locking securing thereof in the second groove (18) of the respective bar (2, 4, 6, 8).

2. Assembly according to claim 1, characterized in that each bar (2, 4, 6, 8) comprises a third groove (36) and that the third grooves (36) of two opposing bars (2, 6; 4, 8) are each formed for form-locking to a vehicle mounting lug (38).

3. Assembly according to claim 2, characterized in that a mounting strip (50) at the edge of a gas bag cover (48) engages in form-locking manner into each of the third grooves (36) of two opposing bars (2, 6; 4, 8).

4. Assembly according to claim 3, characterized in that the mounting strips (50) are formed by bending over the edge of the gas bag cover (48).

5. Assembly according to claim 2, characterized in that the vehicle mounting lugs (38) are bent over on one side for form-locking to the third groove (36).

6. Assembly according to any one of the preceding claims, characterized in that the edges (52, 54, 56) of the base plate (10) form-locking to the first groove (34) are formed by bending over the base plate material.

7. Assembly according to any one of the preceding claims, characterized in that the bars (2, 4, 6, 8) are mitred and form a closed frame (12) round the base plate (10).

## Revendications

1. Ensemble coussin d'air-système de retenue, caractérisé par :
quatre baguettes allongées (2, 4, 6, 8) réalisées dans un même matériau profilé, qui présentent chacune sur leur longueur au moins une première rainure (34) et une deuxième rainure (18) dont la section transversale s'élargit et/ou est incurvée vers l'intérieur,
une plaque de base (10) rectangulaire, pourvue d'ouvertures (14) destinées à recevoir au moins un générateur de gaz (20), dont trois bords (52, 54, 56) sont logés chacun, par concordance de forme, dans la première rainure (34) d'une baguette (4, 6, 8) et un quatrième bord (30) est fixé sur la quatrième baguette (2),
une bordure de l'ouverture d'entrée (46) du coussin d'air (44) sur le pourtour de laquelle sont formées successivement quatre parties (42) en forme de tuyau en vue de leur logement dans la deuxième rainure (18) d'une baguette (2, 4, 6, 8) et
quatre barres (40) qui sont introduites chacune dans l'une des parties (42) en forme de tuyau, en vue de leur fixation par concordance de formes dans la deuxième rainure (18) de la baguette (2, 4, 6, 8) concernée.

2. Ensemble selon la revendication 1, caractérisé en ce que chaque baguette (2, 4, 6, 8) comporte une troisième rainure (36) et en ce que les troisièmes rainures (36) de deux baguettes (2, 6 ; 4, 8) opposées l'une à l'autre sont conçues chacune pour être assemblées par concordance de forme avec une patte de fixation (38) du véhicule.

3. Ensemble selon la revendication 2, caractérisé en ce qu'une baguette de fixation (50), située sur le bord d'un capot (48) du coussin d'air, s'engage par concordance de forme dans chacune des troisièmes rainures (36) de deux baguettes (2, 6 ; 4, 8) opposées l'une à l'autre.

4. Ensemble selon la revendication 3, caractérisé en ce que les baguettes de fixation (50) sont formées par pliage du bord du capot (48) du coussin d'air.

5. Ensemble selon la revendication 2, caractérisé en ce que les pattes de fixation du véhicule (38) sont repliées d'un côté pour l'assemblage par concordance de forme avec la troisième rainure (36).

6. Ensemble selon l'une des revendications précédentes, caractérisé en ce que les bords (52, 54, 56) de la plaque de base (10) s'assemblant par concordance de forme avec la première rainure (34), sont formés par cintrage du matériau de la plaque de base.

7. Ensemble selon l'une des revendications précédentes, caractérisé en ce que les baguettes (2, 4, 6, 8) sont coupées en biais et forment un cadre (12) fermé autour de la plaque de base (10).
